# EUROPÄISCHE PATENTSCHRIFT

(11) **EP 3 863 900 B1**
(45) Veröffentlichungstag und Bekanntmachung des Hinweises auf die Patenterteilung: **26.07.2023**
(21) Anmeldenummer: 19779780.6
(22) Anmeldetag: 23.09.2019
(51) Int. Cl.: B60T 17/00, F15B 21/048, F15B 21/041

(54) **DRUCKLUFTAUFBEREITUNGSSYSTEM UND VERFAHREN ZUM BETREIBEN EINES DRUCKLUFTAUFBEREITUNGSSYSTEMS**
COMPRESSED AIR TREATMENT SYSTEM AND METHOD OF OPERATION OF A COMPRESSED AIR TREATMENT SYSTEM
SYSTÈME DE TRAITEMENT D'AIR COMPRIMÉ ET PROCÉDÉ DE FONCTIONNEMENT D'UN SYSTÈME DE TRAITEMENT D'AIR COMPRIMÉ

(30) Priorität: 11.10.2018 DE 102018217405
(43) Veröffentlichungstag der Anmeldung: 18.08.2021
(73) Patentinhaber: KNORR-BREMSE Systeme für Nutzfahrzeuge GmbH, 80809 München (DE)
(72) Erfinder: ZEMAN, Ferenc, 1114 Budapest (HU)
(86) Internationale Anmeldenummer: PCT/EP2019/075571
(87) Internationale Veröffentlichungsnummer: WO 2020/074245

(56) Entgegenhaltungen:
- EP-A2- 2 140 926
- DE-A1-102007 009 768
- DE-A1-102007 013 671
- DE-A1-102010 018 949
- DE-B4-102007 009 768

## Beschreibung

Die Erfindung betrifft ein Druckluftaufbereitungssystem und ein Verfahren zum Betreiben des Druckluftaufbereitungssystems, insbesondere ein Druckluftaufbereitungssystem und ein Verfahren zum Betreiben des Druckluftaufbereitungssystems, die es ermöglichen, eine Versorgungsleitung nicht nach jedem Lastzyklus öffnen zu müssen.

Es sind Druckluftaufbereitungssysteme bekannt, die Druckluft für ein Fahrzeugdruckluftsystem, das beispielsweise Druckluftbremsen oder andere druckluftbetriebene Aktoren aufweist, aufbereiten. Das Fahrzeugdruckluftsystem oder ein Teil davon wird nach einem entsprechenden Lastzyklus geöffnet, sodass die Druckluft in die Umgebung entweicht. Dies bewirkt einen erhöhten Energieverbrauch bei einem Wiederbefüllen des Fahrzeugdruckluftsystems.

Aus diesem Grund war es erstrebenswert, das Fahrzeugdruckluftsystem mit dem Druckluftaufbereitungssystem so auszubilden, dass das Fahrzeugdruckluftsystem nicht nach jedem Lastzyklus geöffnet wird. In der Druckschrift EP 2 719 595 B1 sind eine Druckluftzuführvorrichtung und ein Verfahren für den Betrieb der Druckluftzuführvorrichtung offenbart, die diese Möglichkeit bieten.

**Fig. 2** zeigt ein Schaltbild eines Druckluftaufbereitungssystems gemäß dem in der Druckschrift EP 2 719 595 B1 offenbarten Stand der Technik.

Ein nicht gezeigter Kompressor wird, wenn ein Fahrzeugdruckluftsystem ausreichend befüllt ist, über eine Kompressoransteuerungsöffnung 114 angesteuert, keine Druckluft zu erzeugen, oder andernfalls, wenn ein Druck in dem Fahrzeugdruckluftsystem nicht ausreichend ist, Druckluft zu erzeugen, die dann über eine Versorgungsleitung 124, eine Trocknerkartusche 138, ein Rückschlagventil 146 und eine Zuführleitung 148 dem Fahrzeugdruckluftsystem zugeführt wird.

Wenn dann eine erste Ventileinheit 112 geschaltet wird, wird die Zuführleitung 148 mit der Kompressoransteuerungsöffnung 114 verbunden und ein Drucksignal wird herausgegeben, den Kompressor anzuhalten und das Druckluftsystem zu entlasten.

Für ein Regenerieren der Trocknerkartusche 138 wird die durch die erste Ventileinheit 112 durchgegangene Luft zusätzlich zu einer zweiten Ventileinheit 118 geleitet, die dann geschaltet ist, einen Durchgang herzustellen, so dass eine Entlastungsventileinheit 122 durch die durch die zweite Ventileinheit 118 durchgeleitete Luft pneumatisch angesteuert wird, um zu öffnen. Zusätzlich zu der Ansteuerluft strömt deshalb die durch die zweite Ventileinheit 118 durchgeleitete Luft über ein Rückschlagventil zum Regenerieren 128 durch die Trocknerkartusche 138, anschließend durch die Entlastungsventileinheit 122 und wird dann über einen Auslass 144 ausgestoßen, um die Trocknerkartusche 138 zu regenerieren.

Während des Befüllens besteht jedoch die Gefahr, dass an dem Rückschlagventil zum Regenerieren 128 eine ungewollte Leckage auftritt. Dadurch strömt Druckluft von einem Leitungsabschnitt stromabwärts von der Trocknerkartusche 138 über die beim Befüllen durchgängige zweite Ventileinheit 118, um zu der Kompressoransteuerungsöffnung 114 zu gelangen. Dadurch wird jedoch die Ansteuerung des Kompressors gestört. Darüber hinaus kann die Leckageluft auch zu einem Steuerungsanschluss 126 der Entlastungsventileinheit 122 strömen, so dass dieses auf einen Durchgang geschaltet wird, so dass Luft von der Versorgungsleitung 124 zu dem Auslass 144 ausgelassen wird.

Dokumente DE 10 2007 013671 A1 und EP 2 140926 A2 offenbaren jeweils ein Druckluftaufbereitungssystem gemäß dem Oberbegriff des Anspruchs 1.

In Dokument DE 10 2007 009768 A1 ist ein Druckluftaufbereitungssystem mit einer ersten Ventileinheit, bei der ein Anschluss mit einer Umgebung verbindbar ist, einer Druckregler-Ventileinheit für eine Druckentlastung einer Versorgungsleitung, wobei ein Steueranschluss der Druckregler-Ventileinheit mit einer zweiten Ventileinheit verbindbar ist, offenbart. Während des Befüllens wird eine Leckageluft eines Rückschlagventils zum Regenerieren über die erste Ventileinheit an eine Umgebung abgegeben.

Auch in Dokument DE 10 2010 018949 A1 wird die Leckageluft des Rückschlagventils zum Regenerieren über eine Ventileinheit, die eine Steuerleitung für einen Kompressor mit Druck beaufschlagt, während des Befüllens des Fahrzeugdruckluftsystems an die Umgebung abgegeben.

Die der Erfindung zugrunde liegende Aufgabe ist es, ein Druckluftaufbereitungssystem und ein Verfahren zum Betreiben des Druckluftaufbereitungssystems bereitzustellen, bei dem der obige Nachteil nicht auftritt, und das auch bei einem Auftreten von Leckagen eine zuverlässige Druckluftversorgung ermöglicht.

Die Aufgabe wird durch ein Druckluftaufbereitungssystem gemäß Anspruch 1 und ein Verfahren gemäß Anspruch 6 gelöst. Vorteilhafte Weiterbildungen sind Gegenstand der abhängigen Ansprüche.

Entsprechend einem Aspekt der Erfindung weist ein Druckluftaufbereitungssystem eine erste Ventileinheit, die ausgebildet ist, eine Steuerleitung für einen Kompressor mit

Druck zu beaufschlagen, und eine Druckregler-Ventileinheit, die für eine Druckentlastung einer Zuführleitung ausgebildet ist, wobei ein Steueranschluss der Druckregler-Ventileinheit mit einer zweiten Ventileinheit verbindbar ist, auf, wobei eine Regenerierungsleitung, die ein Rückschlagventil zum Regenerieren aufweist, direkt mit der Steuerleitung verbindbar ist, und das Druckluftaufbereitungssystem ausgebildet ist, Leckageluft des Rückschlagventils zum Regenerieren während eines Füllbetriebs über die erste Ventileinheit an eine Umgebung abzugeben. Direkt bedeutet in diesem Zusammenhang, dass zwar Leitungen dazwischen vorgesehen sein können, jedoch keine Bauteile, die einen Luftstrom verändern, beispielsweise schalten, wie etwa Ventile.

Durch das Abgeben der Leckageluft des Rückschlagventils zum Regenerieren während des Füllbetriebs wird eine Störung einer Kompressoransteuerung durch eine Leckage an dem Rückschlagventil zum Regenerieren verhindert.

Das erfindungsgemäße Druckluftaufbereitungssystem weist weiterhin eine Versorgungsleitung, die mit dem Kompressor verbindbar ist, einen Lufttrockner mit einem ersten Lufttrockneranschluss und einem zweiten Lufttrockneranschluss, wobei der erste Lufttrockneranschluss mit der Versorgungsleitung verbindbar ist, eine Verbindungsleitung, die mit dem zweiten Lufttrockneranschluss verbindbar ist, ein erstes Rückschlagventil mit einem ersten Rückschlagventilanschluss und einem zweiten Rückschlagventilanschluss, wobei der erste Rückschlagventilanschluss mit der Verbindungsleitung verbindbar ist, eine Auslassleitung, die mit dem zweiten Rückschlagventilanschluss verbindbar ist, wobei das erste Rückschlagventil ausgebildet ist, bei einem Luftstrom von der Verbindungsleitung über das erste Rückschlagventil zu der Auslassleitung zu öffnen, auf. Die erste Ventileinheit ist ausgebildet, alternativ einen ersten Anschluss der ersten Ventileinheit oder einen zweiten Anschluss der ersten Ventileinheit mit einem dritten Anschluss der ersten Ventileinheit zu verbinden, wobei der erste Anschluss der ersten Ventileinheit mit der Auslassleitung verbindbar ist, der zweite Anschluss der ersten Ventileinheit mit einer Umgebung verbindbar ist und der dritte Anschluss der ersten Ventileinheit mit der Steuerleitung verbindbar ist. Die zweite Ventileinheit ist ausgebildet, eine Verbindung von einem ersten Anschluss der zweiten Ventileinheit mit einen zweiten Anschluss der zweiten Ventileinheit zu öffnen oder zu schließen. Die Druckregler-Ventileinheit ist ausgebildet, eine Verbindung von einem ersten Anschluss der Druckregler-Ventileinheit mit einem zweiten Anschluss der Druckregler-Ventileinheit zu öffnen oder zu schließen. Der erste Anschluss der zweiten Ventileinheit ist mit der Steuerleitung und dem dritten Anschluss der ersten Ventileinheit verbindbar und der zweite Anschluss der zweiten Ventileinheit ist mit einem Steuerungsanschluss der Druckregler-Ventileinheit verbindbar. Der erste Anschluss der Druckregler-Ventileinheit ist mit der Versorgungsleitung verbindbar und der zweite Anschluss der Druckregler-Ventileinheit ist mit der Umgebung verbindbar. Das Rückschlagventil zum Regenerieren ist mit einem ersten Anschluss und einem zweiten Anschluss vorgesehen, wobei der erste Anschluss des Rückschlagventils zum Regenerieren mit der Verbindungsleitung verbindbar ist. Der zweite Anschluss des Rückschlagventils zum Regenerieren ist mit dem dritten Anschluss der ersten Ventileinheit verbindbar, wobei das Rückschlagventil zum Regenerieren ausgebildet ist, bei einem Luftstrom von dem dritten Anschluss der ersten Ventileinheit zu der Verbindungsleitung zu öffnen.

Durch diese Zusammenstellung des Druckluftaufbereitungssystems, insbesondere durch die Verbindung des zweiten Anschlusses des Rückschlagventils zum Regenerieren mit dem dritten Anschluss der ersten Ventileinheit, wird eine Störung einer Kompressoransteuerung durch eine Leckage an dem Rückschlagventil zum Regenerieren verhindert.

Bei einem Druckluftaufbereitungssystem gemäß dem Stand der Technik ist das Rückschlagventil zum Regenerieren über eine nicht betätigte zweite Ventileinheit mit der Kompressoransteuerungsöffnung verbunden, so dass sich die Leckage in dem Rückschlagventil zum Regenerieren auf die Ansteuerung des Kompressors auswirkt. Gemäß der vorliegenden Erfindung ist das Rückschlagventil zum Regenerieren jedoch mit dem dritten Anschluss der ersten Ventileinheit verbunden, der zu einer Umgebung hin geöffnet ist wenn die erste Ventileinheit nicht betätigt ist. Daher kann Luft, die aufgrund der Leckage durch das Rückschlagventil zum Regenerieren leckt ohne weitere Auswirkungen ausgelassen werden und es tritt keine Beeinflussung der Kompressoransteuerung oder ein Auslassen von Druckluft auf.

Entsprechend einer vorteilhaften Weiterbildung ist das Druckluftaufbereitungssystem ausgebildet, zumindest einen von einem Füllbetrieb, in dem Luft von der Versorgungsleitung durch den Lufttrockner, die Verbindungsleitung und das erste Rückschlagventil zu der Auslassleitung strömt, einem Energiesparbetrieb, in dem Luft von der Auslassleitung über das erste Ventilelement zu der Steuerleitung strömt, und einem Regenerationsbetrieb auszuführen, in dem Luft von der Auslassleitung über die erste Ventileinheit und die zweite Ventileinheit zu dem Steuerungsanschluss der Druckregler-Ventileinheit strömt, wodurch der erste Anschluss der dritten Ventileinheit und der zweite Anschluss der Druckregler-Ventileinheit miteinander verbindbar sind, und die Luft von der Auslassleitung über die erste Ventileinheit und das Rückschlagventil zum Regenerieren über die Verbindungsleitung durch den Lufttrockner über die Druckregler-Ventileinheit in die Umgebung strömt.

Durch ein bedarfsgerechtes Ausführen des Füllbetriebs, des Energiesparbetriebs und des Regenerationsbetriebs ist es nicht erforderlich, das Druckluftsystem nach jedem Lastzyklus zu öffnen. Somit kann ein damit einhergehender erhöhter Energieverbrauch vermieden werden.

Entsprechend weiteren vorteilhaften Ausbildungen weist die erste Ventileinheit ein 3/2-Wegeventil und/oder die zweite Ventileinheit ein 2/2-Wegeventil und/oder die Druckregler-Ventileinheit ein 2/2-Wegeventil auf.

Aufgrund der kostengünstigen Verfügbarkeit von solchen Ventilen sowie deren kompakte Bauweise kann das Druckluftaufbereitungssystem platzsparend und wirtschaftlich aufgebaut werden.

In einem weiteren Aspekt betrifft die Erfindung ein Verfahren nach Anspruch 6.

Ein Verfahren zum Betreiben des Druckluftaufbereitungssystems umfasst mindestens eines von: einem Ausführen des Füllbetriebs, wobei der Kompressor angesteuert wird, eine Druckluftversorgung auszuführen, und die Luft über die Versorgungsleitung, den Lufttrockner, die Verbindungsleitung, das erste Rückschlagventil und die Auslassleitung zu einem Fahrzeugdruckluftsystem zugeführt wird, einem Ausführen des Energiesparbetriebs, wobei der Kompressor angesteuert wird, die Druckluftversorgung anzuhalten während ein Druck in der Versorgungsleitung aufrechterhalten wird; und einem Ausführen des Regenerationsbetriebs, wobei der Kompressor angesteuert wird, die Druckluftversorgung anzuhalten, und wobei die Luft von der Auslassleitung über die erste Ventileinheit und die zweite Ventileinheit zu dem Steuerungsanschluss der Druckregler-Ventileinheit strömt, wodurch der erste Anschluss der Druckregler-Ventileinheit und der zweite Anschluss der Druckregler-Ventileinheit miteinander verbunden werden, und die Luft von der Auslassleitung über die erste Ventileinheit und über das Rückschlagventil zum Regenerieren und über die Verbindungsleitung durch den Lufttrockner über die Druckregler-Ventileinheit in die Umgebung strömt, auf.

Durch das Ausführen des Füllbetriebs, des Energiesparbetriebs und des Regenerationsbetriebs ist es nicht erforderlich, das Druckluftsystem nach jedem Lastzyklus zu öffnen. Somit kann ein dadurch erzeugter erhöhter Energieverbrauch verhindert werden.

Die Erfindung wird nun anhand eines Ausführungsbeispiels unter Bezugnahme auf die beigefügten Zeichnungen erläutert.

Insbesondere zeigt
- Fig. 1: ein Schaltbild eines erfindungsgemäßen Druckluftaufbereitungssystems; und

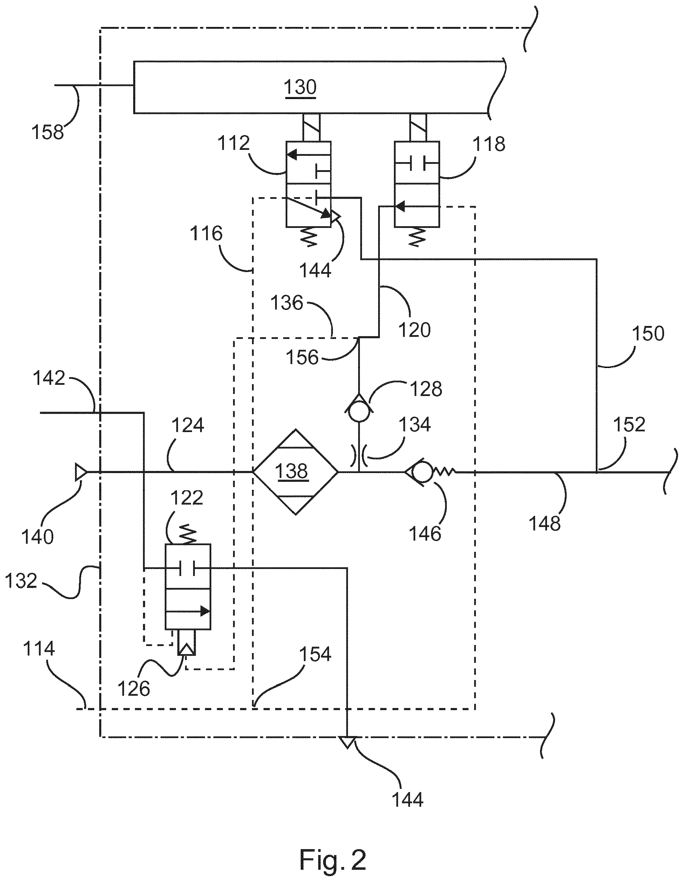

- Fig. 2: ein Schaltbild eines Druckluftaufbereitungssystems gemäß dem Stand der Technik.

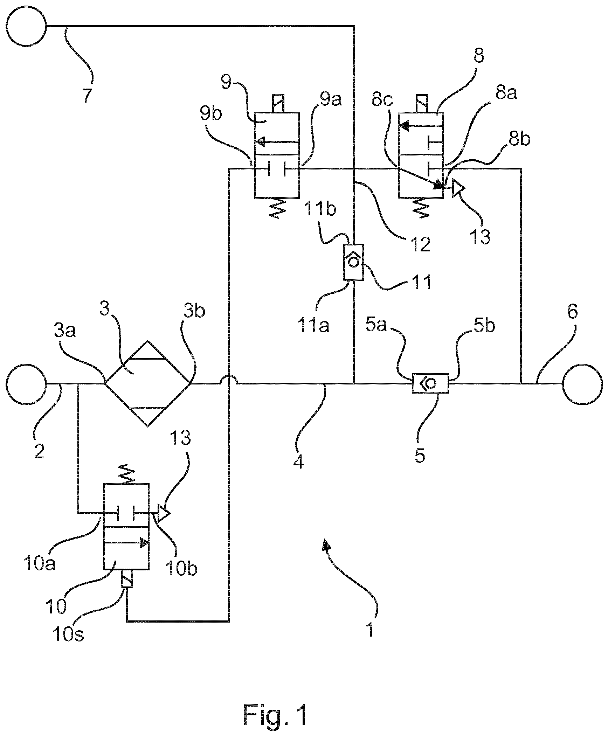

**Fig.1** zeigt Schaltbild eines erfindungsgemäßen Druckluftaufbereitungssystems 1.

Das Druckluftaufbereitungssystem 1 weist eine Versorgungsleitung 2 auf, die mit einen nicht gezeigten Kompressor verbunden ist. Ferner weist das

Druckluftaufbereitungssystem 1 einen Lufttrockner 3 mit einem ersten Lufttrockneranschluss 3a und einem zweiten Lufttrockneranschluss 3b auf, wobei der erste Lufttrockneranschluss 3a mit der Versorgungsleitung 2 verbunden ist.

Darüber hinaus weist das Druckluftaufbereitungssystem 1 eine Verbindungsleitung 4 auf, die mit dem zweiten Lufttrockneranschluss 3b verbunden ist.

Außerdem ist ein erstes Rückschlagventil 5 mit einem ersten Rückschlagventilanschluss 5a und einem zweiten Rückschlagventilanschluss 5b vorgesehen, wobei der erste Rückschlagventilanschluss 5a mit der Verbindungsleitung 4 verbunden ist. Das erste Rückschlagventil 5 öffnet bei einem Luftstrom von der Verbindungsleitung 4 über das erste Rückschlagventil 5 zu der Auslassleitung 6.

Weiterhin ist noch eine Auslassleitung 6, die mit dem zweiten Rückschlagventilanschluss 5b verbunden ist, vorgesehen.

Das Druckluftaufbereitungssystem 1 weist außerdem eine Steuerleitung 7 auf, die mit dem Kompressor verbunden ist, um einen Betrieb des Kompressors zu steuern.

In dem Druckluftaufbereitungssystem 1 ist eine erste Ventileinheit 8 vorgesehen, die alternativ einen ersten Anschluss 8a der ersten Ventileinheit 8 oder einen zweiten Anschluss 8b der ersten Ventileinheit 8 mit einem dritten Anschluss 8c der ersten Ventileinheit 8 verbindet. Der erste Anschluss 8a der ersten Ventileinheit 8 ist mit der Auslassleitung 6 verbunden, der zweite Anschluss 8b der ersten Ventileinheit 8 ist mit einer Umgebung 13 verbunden und der dritte Anschluss 8c der ersten Ventileinheit 8 ist auch mit der Steuerleitung 7 verbunden. Die Verbindung mit der Umgebung bedeutet, dass Luft ohne nennenswerten Gegendruck in die Umgebung abströmen kann.

Ferner sind in dem Druckluftaufbereitungssystem 1 eine zweite Ventileinheit 9, die eine Verbindung von einem ersten Anschluss 9a der zweiten Ventileinheit 9 mit einem zweiten Anschluss 9b der zweiten Ventileinheit 9 öffnet oder diese schließt, und eine Druckregler-Ventileinheit 10 vorgesehen, die eine Verbindung von einem ersten Anschluss 10a der Druckregler-Ventileinheit 10 mit einem zweiten Anschluss 10b der Druckregler-Ventileinheit 10 öffnet oder diese schließt.

Der erste Anschluss 9a der zweiten Ventileinheit 9 ist mit der Steuerleitung 7 und dem dritten Anschluss 8c der ersten Ventileinheit 8 verbunden und der zweite Anschluss 9b der zweiten Ventileinheit 9 ist mit einem Steuerungsanschluss 10s der Druckregler-Ventileinheit 10 verbunden. Der erste Anschluss 10a der Druckregler-Ventileinheit 10 ist mit der Versorgungsleitung verbunden und der zweite Anschluss 10b der Druckregler-Ventileinheit 10 ist mit der Umgebung 13 verbunden.

Schließlich ist ein Rückschlagventil zum Regenerieren 11 mit einem ersten Anschluss 11a und einem zweiten Anschluss 11b in einer Regenerierungsleitung 12 vorgesehen, wobei der erste Anschluss 11a des Rückschlagventils zum Regenerieren 11 mit der Verbindungsleitung 4 verbunden ist. Der zweite Anschluss 11b des Rückschlagventils zum Regenerieren 11 ist mit dem dritten Anschluss 8c der ersten Ventileinheit 8 verbunden. Das Rückschlagventil zum Regenerieren 11 öffnet bei einem Luftstrom von dem dritten Anschluss 8c der ersten Ventileinheit 8 über das Rückschlagventil zum Regenerieren 11 zu der Verbindungsleitung 4.

Die erste Ventileinheit 8 weist ein einfachwirkendes 3/2-Wegeventil auf, das über eine Magnetspule von einem unbetätigten Zustand in einen betätigten Zustand geschaltet wird und mittels einer Rückstellfeder wieder in den unbetätigten Zustand zurückgeschaltet wird. In dem unbetätigten Zustand wird der zweite Anschluss 8b zu dem dritten Anschluss 8c durchgeschaltet und der erste Anschluss 8a abgesperrt. In dem betätigten Zustand wird der erste Anschluss 8a zu dem dritten Anschluss 8c durchgeschaltet und der zweite Anschluss 8b abgesperrt.

Die zweite Ventileinheit 9 weist ein einfachwirkendes 2/2-Wegeventil auf, das elektrisch über eine Magnetspule von einem unbetätigten Zustand in einen betätigten Zustand geschaltet wird und mittels einer Rückstellfeder wieder in den unbetätigten Zustand zurückgeschaltet wird. In dem unbetätigten Zustand werden der erste Anschluss 9a und der zweite Anschluss 9b abgesperrt. In dem betätigten Zustand wird der erste Anschluss 9a zu dem zweiten Anschluss 9b durchgeschaltet.

Die Druckregler-Ventileinheit 10 weist ein einfachwirkendes 2/2-Wegeventil auf, das über einen pneumatischen Betätiger von einem unbetätigten Zustand in einen betätigten Zustand geschaltet wird und mittels einer Rückstellfeder wieder in den unbetätigten Zustand zurückgeschaltet wird. In dem unbetätigten Zustand werden der erste Anschluss 10a und der zweite Anschluss 10b abgesperrt. In dem betätigten Zustand wird der erste Anschluss 10a zu dem zweiten Anschluss 10b durchgeschaltet.

In alternativen Ausführungsformen sind einerseits Ventileinheiten im Einsatz, die pneumatisch statt elektrisch angesteuert werden, andererseits können statt 3/2-Wegeventile bzw. 2/2-Wegeventile beispielsweise auch 5/2-Wegeventile bzw. 4/2-Wegeventile eingesetzt werden, solange die grundsätzlichen Funktionen des Durchschaltens und des Sperrens ermöglicht werden. Ferner können alternativ auch doppeltwirkende Ventile eingesetzt werden, die dann nicht über eine Federkraft zurückgesetzt werden, sondern über elektrische oder pneumatische Signale.

In einer weiteren alternativen Ausführungsform ist keine Verbindungsleitung 4 vorgesehen, sondern der zweite Lufttrockneranschluss 3b, der erste Rückschlagventilanschluss 5a und der erste Anschluss 11a des Rückschlagventils zum Regenerieren 11 sind direkt miteinander verbunden.

In weiteren alternativen Ausführungsformen sind nicht sämtliche Komponenten zwingend erforderlich, sofern ihre Funktion durch andere Komponenten übernommen wird.

Im Betrieb werden nach Bedarf ein Füllbetrieb, ein Energiesparbetrieb oder ein Regenerationsbetrieb durch das Druckluftaufbereitungssystem 1 ausgeführt.

In dem Füllbetrieb wird der Kompressor angesteuert, eine Druckluftversorgung auszuführen, und die Luft wird über die Versorgungsleitung 2, den Lufttrockner 3, die Verbindungsleitung 4, das erste Rückschlagventil 5 und die Auslassleitung 6 zu einem Fahrzeugdruckluftsystem zugeführt.

Bei dem Energiesparbetrieb wird der Kompressor angesteuert, die Druckluftversorgung anzuhalten, so dass keine Luft von dem Kompressor zu dem Druckluftaufbereitungssystem 1 strömt, während ein Druck in der Versorgungsleitung 2 aufrechterhalten wird.

In dem Regenerationsbetrieb wird der Kompressor angesteuert, die Druckluftversorgung anzuhalten, und die Luft zum Regenerieren strömt von der Auslassleitung 6 über die erste Ventileinheit 8 und die zweite Ventileinheit 9 zu dem Steuerungsanschluss 10s der Druckregler-Ventileinheit 10, wodurch der erste Anschluss 10a der Druckregler-Ventileinheit 10 und der zweite Anschluss 10b der Druckregler-Ventileinheit 10 miteinander verbunden werden. Die Luft von der Auslassleitung 6 strömt daher über die erste Ventileinheit 8 und durch die Regenerierungsleitung 12 über das Rückschlagventil zum Regenerieren 11 und über die Verbindungsleitung 4 durch den Lufttrockner 3 über die Druckregler-Ventileinheit 10 in die Umgebung 13.

### BEZUGSZEICHENLISTE

- 1: Druckluftaufbereitungssystem
- 2: Versorgungsleitung
- 3: Lufttrockner
- 3a: erster Lufttrockneranschluss
- 3b: zweiter Lufttrockneranschluss
- 4: Verbindungsleitung
- 5: erstes Rückschlagventil
- 5a: erster Rückschlagventilanschluss
- 5b: zweiter Rückschlagventilanschluss
- 6: Auslassleitung
- 7: Steuerleitung
- 8: erste Ventileinheit
- 8a: erster Anschluss der ersten Ventileinheit
- 8b: zweiter Anschluss der ersten Ventileinheit
- 8c: dritter Anschluss der ersten Ventileinheit
- 9: zweite Ventileinheit
- 9a: erster Anschluss der zweiten Ventileinheit
- 9b: zweiter Anschluss der zweiten Ventileinheit
- 10: Druckregler-Ventileinheit
- 10a: erster Anschluss der Druckregler-Ventileinheit
- 10b: zweiter Anschluss der Druckregler-Ventileinheit
- 10s: Steuerungsanschluss der Druckregler-Ventileinheit
- 11: Rückschlagventil zum Regenerieren
- 11a: erster Anschluss des Rückschlagventils zum Regenerieren
- 11b: zweiter Anschluss des Rückschlagventils zum Regenerieren
- 12: Regenerierungsleitung
- 13: Umgebung

## Patentansprüche

1. Druckluftaufbereitungssystem (1), aufweisend
eine erste Ventileinheit (8), die ausgebildet ist, eine Steuerleitung (7) für einen Kompressor mit Druck zu beaufschlagen,
eine Druckregler-Ventileinheit (10), die für eine Druckentlastung einer mit dem Kompressor verbindbaren Versorgungsleitung (2) ausgebildet ist, wobei ein Steueranschluss (10s) der Druckregler-Ventileinheit (10) mit einer zweiten Ventileinheit (9) verbindbar ist,
einen Lufttrockner (3) mit einem ersten Lufttrockneranschluss (3a) und einem zweiten Lufttrockneranschluss (3b), wobei der erste Lufttrockneranschluss (3a) mit der Versorgungsleitung (2) verbindbar ist,
eine Verbindungsleitung (4), die mit dem zweiten Lufttrockneranschluss (3b) verbindbar ist, H ein erstes Rückschlagventil (5) mit einem ersten Rückschlagventilanschluss (5a) und einem zweiten Rückschlagventilanschluss (5b), wobei der erste Rückschlagventilanschluss (5a) mit der Verbindungsleitung (4) verbindbar ist, und H
eine Auslassleitung (6), die mit dem zweiten Rückschlagventilanschluss (5b) verbindbar ist,
wobei
eine Regenerierungsleitung (12), die ein Rückschlagventil zum Regenerieren (11) einer Trocknerkartusche des Lufttrockners (3) des Druckluftaufbereitungssystems (1) aufweist, direkt mit der Steuerleitung (7) verbunden ist, und
das Druckluftaufbereitungssystem (1) ausgebildet ist, Leckageluft des Rückschlagventils zum Regenerieren (11), während eines Füllbetriebs, in dem der Kompressor angesteuert wird, eine Druckluftversorgung auszuführen und Luft zu einem Fahrzeugdruckluftsystem zuzuführen, über die erste Ventileinheit (8) an eine Umgebung (13) abzugeben,
wobei
das erste Rückschlagventil (5) ausgebildet ist, bei einem Luftstrom von der Verbindungsleitung (4) über das erste Rückschlagventil (5) zu der Auslassleitung (6) zu öffnen,
die erste Ventileinheit (8) ausgebildet ist, alternativ einen ersten Anschluss (8a) der ersten Ventileinheit (8) oder einen zweiten Anschluss (8b) der ersten Ventileinheit (8) mit einem dritten Anschluss (8c) der ersten Ventileinheit (8) zu verbinden, wobei der erste Anschluss (8a) der ersten Ventileinheit (8) mit der Auslassleitung (6) verbindbar ist, der zweite Anschluss (8b) der ersten Ventileinheit (8) mit der Umgebung (13) verbindbar ist und der dritte Anschluss (8c) der ersten Ventileinheit (8) mit der Steuerleitung (7) verbindbar ist,
die zweite Ventileinheit (9) ausgebildet ist, eine Verbindung zwischen einem ersten Anschluss (9a) der zweiten Ventileinheit (9) und einem zweiten Anschluss (9b) der zweiten Ventileinheit (9) zu öffnen oder zu schließen,
die Druckregler-Ventileinheit (10) ausgebildet ist, eine Verbindung zwischen einem ersten Anschluss (10a) der Druckregler-Ventileinheit (10) und einem zweiten Anschluss (10b) der Druckregler-Ventileinheit (10) zu öffnen oder zu schließen,
der zweite Anschluss (9b) der zweiten Ventileinheit (9) mit dem Steuerungsanschluss (10s) der Druckregler-Ventileinheit (10) verbindbar ist,
der erste Anschluss (10a) der Druckregler-Ventileinheit (10) mit der Versorgungsleitung (2) verbindbar ist und der zweite Anschluss (10b) der Druckregler-Ventileinheit (10) mit der Umgebung (13) verbindbar ist,
das Rückschlagventil zum Regenerieren (11) mit einem ersten Anschluss (11a) und einem zweiten Anschluss (11b) versehen ist, wobei der erste Anschluss (11a) des Rückschlagventils zum Regenerieren (11) mit der Verbindungsleitung (4) verbindbar ist, und
der zweite Anschluss (11b) des Rückschlagventils zum Regenerieren (11) mit dem dritten Anschluss (8c) der ersten Ventileinheit (8) verbindbar ist, wobei das Rückschlagventil zum Regenerieren (11) ausgebildet ist, bei einem Luftstrom von dem dritten Anschluss (8c) der ersten Ventileinheit (8) über das Rückschlagventil zum Regenerieren (11) zu der Verbindungsleitung (4) zu öffnen,
**dadurch gekennzeichnet, dass** der erste Anschluss (9a) der zweiten Ventileinheit (9) mit der Steuerleitung (7) und mit dem dritten Anschluss (8c) der ersten Ventileinheit (8) verbindbar ist.

2. Druckluftaufbereitungssystem (1) gemäß Anspruch 1, wobei
das Druckluftaufbereitungssystem (1) ausgebildet ist, zumindest einen von
dem Füllbetrieb, in dem Luft von der Versorgungsleitung (2) durch den Lufttrockner (3), die Verbindungsleitung (4) und das erste Rückschlagventil (5) zu der Auslassleitung (6) strömt,
einem Energiesparbetrieb, in dem Luft von der Auslassleitung (6) über die erste Ventileinheit (8) zu der Steuerleitung (7) strömt, und
einen Regenerationsbetrieb auszuführen, in dem Luft von der Auslassleitung (6) über die erste Ventileinheit (8) und die zweite Ventileinheit (9) zu dem Steuerungsanschluss (10s) der Druckregler-Ventileinheit (10) strömt, wodurch der erste Anschluss (10a) der Druckregler-Ventileinheit (10) und der zweite Anschluss (10b) der Druckregler-Ventileinheit (10) miteinander verbindbar sind, und
die Luft von der Auslassleitung (6) über die erste Ventileinheit (8) und das Rückschlagventil zum Regenerieren (11) über die Verbindungsleitung (4) durch den Lufttrockner (3) über die Druckregler-Ventileinheit (10) in die Umgebung (13) strömt.

3. Druckluftaufbereitungssystem (1) gemäß einem der Ansprüche 1 oder 2, wobei die erste Ventileinheit (8) ein 3/2-Wegeventil aufweist.

4. Druckluftaufbereitungssystem (1) gemäß einem der vorangehenden Ansprüche, wobei
die zweite Ventileinheit (9) ein 2/2-Wegeventil aufweist.

5. Druckluftaufbereitungssystem (1) gemäß einem der vorangehenden Ansprüche, wobei
die Druckregler-Ventileinheit (10) ein 2/2-Wegeventil aufweist.

6. Verfahren zum Betreiben eines Druckluftaufbereitungssystems (1) gemäß einem der vorangehenden Ansprüche, wobei das Verfahren den Schritt aufweist:
- Ausführen des Regenerationsbetriebs, wobei der Kompressor angesteuert wird, die Druckluftversorgung anzuhalten,
wobei die Luft bei der Ausführung des Regenerationsbetriebs von der Auslassleitung (6) über die erste Ventileinheit (8) und die zweite Ventileinheit (9) zu dem Steuerungsanschluss (10s) der Druckregler-Ventileinheit (10) strömt, wodurch der erste Anschluss (10a) der Druckregler-Ventileinheit (10) und der zweite Anschluss (10b) der Druckregler-Ventileinheit (10) miteinander verbunden werden, und die Luft von der Auslassleitung (6) über die erste Ventileinheit (8) und über das Rückschlagventil zum Regenerieren (11) und über die Verbindungsleitung (4) durch den Lufttrockner (3) über die Druckregler-Ventileinheit (10) in die Umgebung (13) strömt.

## Claims

1. A compressed-air treatment system (1), comprising
a first valve unit (8) that is configured to apply pressure to a control line (7) for a compressor,
a pressure regulator valve unit (10) that is configured to relieve pressure in a supply line (2) that can be connected to the compressor, it being possible to connect a control port (10s) of the pressure regulator valve unit (10) to a second valve unit (9),
an air dryer (3) having a first air dryer port (3a) and a second air dryer port (3b), it being possible to connect the first air dryer port (3a) to the control line (2),
a connection line (4) that can be connected to the second air dryer port (3b),
a first check valve (5) having a first check valve port (5a) and a second check valve port (5b), it being possible to connect the first check valve port (5a) to the connection line (4), and
an outlet line (6) that can be connected to the second check valve port (5b),
a regeneration line (12) that has a check valve for the regeneration (11) of a dryer cartridge of the air dryer (3) of the compressed-air treatment system (1) being connected directly to the control line (7), and,
the compressed-air treatment system (1) being configured to release leakage air from the check valve for regeneration via the first valve unit (8) to the atmosphere (13) in a filling mode in which the compressor is actuated to provide a compressed air supply and to feed air to a vehicle compressed-air system,
the first check valve (5) being configured to open when air flows from the connection line (4) via the first check valve (5) to the outlet line (6),
the first valve unit (8) being configured, alternatively, to connect a first port (8a) of the first valve unit (8) or a second port (8b) of the first valve unit (8) to a third port (8c) of the first valve unit (8), it being possible to connect the first port (8a) of the first valve unit (8) to the outlet line (6), to connect the second port (8b) of the first valve unit (8) to the atmosphere (13) and to connect the third port (8c) of the first valve unit (8) to the control line (7),
the second valve unit (9) being configured to open or close a connection between a first port (9a) of the second valve unit (9) and a second port (9b) of the second valve unit (9),
the pressure regulator valve unit (10) being configured to open or close a connection between a first port (10a) of the pressure regulator valve unit (10) and a second port (10b) of the pressure regulator valve unit (10),
it being possible to connect the second port (9b) of the second valve unit (9) to the control port (10s) of the pressure regulator valve unit (10),
it being possible to connect the first port (10a) of the pressure regulator valve unit (10) to the supply line (2) and to connect the second port (10b) of the pressure regulator valve unit (10) to the atmosphere (13),
the check valve for regeneration (11) being provided with a first port (11a) and a second port (11b), it being possible to connect the first port (11a) of the check valve for regeneration (11) to the connection line (4), and
it being possible to connect the second port (11b) of the check valve for regeneration (11) to the third port (8c) of the first valve unit (8), the check valve for regeneration (11) being configured to open when air flows from the third port (8c) of the first valve unit (8) via the check valve for regeneration (11) to the connection line (4),
**characterised in that** it is possible to connect the first port (9a) of the second valve unit (9) to the control line (7) and to the first port (8c) of the first valve unit (8).

2. A compressed-air treatment system (1) according to claim 1,
the compressed-air treatment system (1) being configured to operate in at least one of the following:
the filling mode in which air flows from the supply line (2) through the air dryer (3), the connection line (4) and the first check valve (5) to the outlet line (6),
a power-saving mode in which air flows from the outlet line (6) via the first valve unit (8) to the control line (7), and
a regeneration mode in which air flows from the outlet line (6) via the first valve unit (8) and the second valve unit (9) to the control port (10s) of the pressure regulator valve unit (10), thereby making it possible to connect the first port (10a) of the pressure regulator valve unit (10) and the second port (10b) of the pressure regulator valve unit (10) to one another, and
the air flowing from the outlet line (6) via the first valve unit (8) and the check valve for regeneration (11) via the connection line (4) through the air dryer (3) via the pressure regulator valve unit (10) into the atmosphere (13).

3. A compressed-air treatment system (1) according to either of claims 1 or 2, the first valve unit (8) having a 3/2-way valve.

4. A compressed-air treatment system (1) according to any one of the preceding claims,
the second valve unit (9) having a 2/2-way valve.

5. A compressed-air treatment system (1) according to any one of the preceding claims,
the pressure regulator valve unit (10) having a 2/2-way valve.

6. A method for operating a compressed-air treatment system (1) according to any one of the preceding claims, the method comprising the following step:
- operation in regeneration mode, the compressor being actuated to stop the compressed air supply,
during operation in regeneration mode the air flowing from the outlet line (6) via the first valve unit (8) and the second valve unit (9) to the control port (10s) of the pressure regulator valve unit (10), thereby connecting the first port (10a) of the pressure regulator valve unit (10) and the second port (10b) of the pressure regulator valve unit (10) to one another, and the air flowing from the outlet line (6) via the first valve unit (8), via the check valve for regeneration (11) and via the connection line (4) through the air dryer (3) via the pressure regulator valve unit (10) into the atmosphere (13).

## Revendications

1. Système (1) de traitement d'air comprimé, comportant :
une première unité (8) de soupape, qui est constituée pour appliquer une pression à un conduit (7) de commande d'un compresseur,
une unité (10) de soupape de régleur de pression, qui est constituée pour détendre la pression dans un conduit (2) d'alimentation pouvant être relié au compresseur, dans lequel un raccord (10s) de commande de l'unité (10) de soupape de régleur de pression peut être relié, à une deuxième unité (9) de soupape,
un sécheur (3) d'air ayant un premier raccord (3a) de sécheur d'air et un deuxième raccord (3b) de sécheur d'air, dans lequel le premier raccord (3a) de sécheur d'air peut être relié au conduit (2) d'alimentation,
un premier conduit (4) de liaison, qui peut être relié au deuxième raccord (3b) de sécheur d'air,
un premier clapet (5) antiretour ayant un premier raccord (5a) de clapet antiretour et un deuxième raccord (5b) de clapet antiretour, dans lequel le premier raccord (5a) de clapet antiretour peut être relié au conduit (4) de liaison, et
un conduit (6) de sortie, qui peut être relié au deuxième raccord (5b) de clapet antiretour,
dans lequel
un conduit (12) de régénération, qui a un clapet antiretour de régénération (11) d'une cartouche du sécheur (3) d'air du système (1) de traitement d'air comprimé, est relié directement au conduit (7) de commande, et
le système (1) de traitement d'air comprimé est constitué pour régénérer (11) de l'air de fuite du clapet antiretour, pendant un fonctionnement en remplissage, dans lequel le compresseur est commandé pour effectuer une alimentation en air comprimé et pour envoyer de l'air à un système d'air comprimé de véhicule et pour le céder, par la première unité (8) de soupape à un environnement (13),
dans lequel
le premier clapet (5) antiretour est constitué pour s'ouvrir s'il y a un courant d'air allant du conduit (4) de liaison au conduit (6) de sortie, en passant par le premier clapet (5) antiretour,
la première unité (8) de soupape est constituée pour relier en alternance un premier raccord (8a) de la première unité (8) de soupape ou un deuxième raccord (8b) de la première unité (8) de soupape à un troisième raccord (8c) de la première unité (8) de soupape, dans lequel le premier raccord (8a) de la première unité (8) de soupape peut être relié au conduit (6) de sortie, le deuxième raccord (8b) de la première unité (8) de soupape peut être relié à l'environnement (13) et le troisième raccord (8c) de la première unité (8) de soupape peut être relié au conduit (7) de commande,
la deuxième unité (9) de soupape est constituée pour ouvrir ou fermer une liaison entre un premier raccord (9a) de la deuxième unité (9) de soupape et un deuxième raccord (9b) de la deuxième unité (9) de soupape,
l'unité (10) de soupape de régleur de pression est constituée pour ouvrir ou fermer une liaison entre un premier raccord (10a) de l'unité (10) de soupape de régleur de pression et un deuxième raccord (10b) de l'unité (10) de soupape de régleur de pression,
le deuxième raccord (9b) de la deuxième unité (9) de soupape peut être relié au raccord (10s) de commande de l'unité (10) de soupape de régleur de pression,
le premier raccord (10a) de l'unité (10) de soupape de régleur de pression peut être relié au conduit (2) d'alimentation et le deuxième raccord (10b) de l'unité (10) de soupape de régleur de pression peut être relié à l'environnement (13),
le clapet antiretour est pourvu pour la régénération (11) d'un premier raccord (11a) et d'un deuxième raccord (11b), dans lequel le premier raccord (11a) du clapet antiretour pour la régénération (11) peut être relié au conduit (4) de liaison, et
le deuxième raccord (11b) du clapet antiretour pour la régénération (11) peut être relié au troisième raccord (8c) de la première unité (8) de soupape, dans lequel le clapet antiretour pour la régénération (11) est constitué pour s'ouvrir s'il y a un courant d'air allant du troisième raccord (8c) de la première unité (8) de soupape au conduit (4) de liaison en passant par le clapet antiretour pour la régénération (11),
**caractérisé en ce que** le premier raccord (9a) de la deuxième unité (9) de soupape peut être relié au conduit (7) de commande et au troisième raccord (8c) de la première unité (8) de soupape.

2. Système (1) de traitement d'air comprimé suivant la revendication 1, dans lequel
le système (1) de traitement d'air comprimé est constitué pour passer au moins du fonctionnement en remplissage, dans lequel de l'air passe du conduit (2) d'alimentation au conduit (6) de sortie, en passant par le sécheur (3) d'air, le conduit (4) de liaison et le premier clapet (5) antiretour, à un fonctionnement en économie d'énergie, dans lequel de l'air passe du conduit (6) de sortie au conduit (7) de commande, en passant par la première unité (8) de soupape, et
effectuer un fonctionnement en régénération, dans lequel de l'air passe du conduit (6) de sortie au raccord (10s) de commande de l'unité (10) de soupape de régleur de pression, en passant par la première unité (8) de soupape et par la deuxième unité (9) de soupape, grâce à quoi le premier raccord (10a) de l'unité (10) de soupape de régleur de pression et le deuxième raccord (10b) de l'unité (10) de soupape de régleur de pression peuvent être reliés l'un à l'autre, et
l'air passe du conduit (6) de sortie à l'environnement (13), en passant par la première unité (8) de soupape et par le clapet antiretour de régénération (11), en passant par le conduit (4) de liaison dans le sécheur (3) d'air par l'unité (10) de soupape de régleur de pression.

3. Système (1) de,traitement d'air comprimé suivant l'une des revendications 1 ou 2, dans lequel
la première unité (8) de soupape a une soupape à 3/2 voies.

4. Système (1) de traitement d'air comprimé suivant l'une des revendications précédentes, dans lequel
la deuxième unité (9) de soupape a une soupape à 2/2 voies.

5. Système (1) de traitement d'air comprimé suivant l'une des revendications précédentes, dans lequel
l'unité (10) de soupape de régleur de pression a une soupape à 2/2 voies.

6. Procédé pour faire fonctionner un système (1) de traitement d'air suivant l'une des revendications précédentes, dans lequel le procédé a le stade :
- exécution du fonctionnement en régénération, dans lequel on commande le compresseur, d'arrêter l'alimentation en air comprimé,
dans lequel l'air, lors de l'exécution du fonctionnement en régénération passe du conduit (6) de sortie au raccord (10s) de commande de l'unité (10) de soupape de régleur de pression, en passant par la première unité (8) de soupape et par la deuxième unité (9) de soupape, grâce à quoi le premier raccord (10a) de l'unité (10) de soupape de régleur de pression et le deuxième raccord (10b) de l'unité (10) de soupape de régleur de pression sont reliées entre elles, et l'air passe du conduit (6) de sortie à l'environnement (13), en passant par la première unité (8) de soupape et par le clapet antiretour de régénération (11) et par le conduit (4) de liaison dans le sécheur (3) d'air, en passant par l'unité (10) de soupape de régleur de pression.
